# EUROPÄISCHE PATENTSCHRIFT

(11) **EP 1 888 703 B1**
(45) Veröffentlichungstag und Bekanntmachung des Hinweises auf die Patenterteilung: **07.03.2012**
(21) Anmeldenummer: 06743325.0
(22) Anmeldetag: 18.04.2006
(51) Int. Cl.: C09J 123/00, C09J 123/08, C09J 7/02, C09J 5/06, C08J 5/12, C09J 123/12

(54) **RÜCKENFIXIERUNG VON KUNSTRASENROHWARE MIT SCHMELZKLEBERN AUF BASIS VON AMORPHEN POLY-ALPHA -OLEFINEN UND/ODER MODIFIZIERTEN, AMORPHEN POLY-ALPHA-OLEFINEN**
BACKFIXING OF ARTIFICIAL TURF STOCK MATERIAL WITH HOTMELTS BASED ON AMORPHOUS POLY-ALPHA -OLEFINS AND/OR MODIFIED AMORPHOUS POLY-ALPHA -OLEFINS
FIXAGE DE L'ARRIERE D'UN TISSU BRUT POUR GAZON ARTIFICIEL AU MOYEN DE COLLES FUSIBLES A BASE DE POLY-(A)-OLEFINES AMORPHES ET/OU DE POLY-(A)-OLEFINES AMORPHES MODIFIEES

(30) Priorität: 10.06.2005 DE 102005026765
(43) Veröffentlichungstag der Anmeldung: 20.02.2008
(73) Patentinhaber: Evonik Degussa GmbH, 45128 Essen (DE)
(72) Erfinder: VEY, Marlies, 45772 Marl (DE); MINDACH, Lutz, 45797 Bochum (DE); ZAGEFKA, Hans-Dieter, 45721 Haltern Am See (DE)
(86) Internationale Anmeldenummer: PCT/EP2006/061644
(87) Internationale Veröffentlichungsnummer: WO 2006/131417

(56) Entgegenhaltungen:
- EP-A- 0 442 045
- WO-A-99/28557
- DE-A1- 19 944 225
- US-A- 4 221 696
- US-A- 4 719 260
- US-A- 5 512 625
- US-A- 5 565 511
- US-A1- 2004 234 719

## Beschreibung

Die Erfindung betrifft die Rückenfixierung von Kunstrasenrohware mit Schmelzkleber auf Basis von amorphen Poly-α-Olefinen und/oder modifizierten, amorphen Poly-α-Olefinen, ein Verfahren zu ihrer Herstellung sowie die Verwendung von Schmelzkleber auf Basis von amorphen Poly-α-Olefinen und/oder modifizierten, amorphen Poly-α-Olefinen zur Rückenfixierung von Kunstrasenrohware.

Bis zum heutigen Zeitpunkt werden Bändchengarne von Kunstrasenrohware, bestehend aus Polyethen oder Polypropen, aber auch aus Polyester oder Polyamid oder Mischpolymerisate hauptsächlich mit wasserbasierenden Systemen wie z. B. SBR-Latex, gefüllt mit unterschiedlichen Mengen an Kreide, verankert.

Bei einer Einbindung mit wässerigen Systemen muss nach der Beschichtung das Wasser verdampft werden. Dies geschieht unter erheblichem Energie- und Zeiteinsatz in bis zu 60 bis 80 m langen Trockenkanälen.

Teilweise werden die Pole auch mit Polyurethanen verankert. Hohe Materialkosten und hohe Auflagen für den Transport des Isocyanates sind die Nachteile dieses Systems.

Ein sortenreines Recycling ist mit Produkten des Standes der Technik nicht möglich.

Somit bestand die Aufgabe, eine Methode zur Verfügung zu stellen, um eine Rückenfixierung von Kunstrasenrohwaren auf einfache und wirksame Weise zu bewirken und hierbei die Nachteile zu vermeiden, die mit der Verwendung von Latex oder Polyurethanen verbunden sind.

Diese Aufgabe wurde durch den Einsatz von Schmelzklebern auf Basis von amorphen Poly-α-Olefinen und/oder modifizierten, amorphen Poly-α-Olefinen zur Rückenfixierung gelöst. Gegenstand der Erfindung ist eine Kunstrasenrohware gemäß Anspruch 1, dadurch gekennzeichnet, dass diese zur Rückenfixierung einen Schmelzkleber auf Basis von amorphen Poly-α-Olefinen und/oder modifizierten amorphen Poly-α-Olefinen enthält.

Gegenstand der Erfindung ist auch ein Verfahren zur Rückenfixierung von Kunstrasenrohware gemäß Anspruch 12, dadurch gekennzeichnet, dass ein Schmelzkleber auf Basis von amorphen Poly-α-Olefinen und/oder modifizierten amorphen Poly-α-Olefinen eingesetzt wird.

Weiterer Gegenstand ist die Verwendung gemäß Anspruch 14 von Schmelzklebern auf Basis von amorphen Poly-α-Olefinen und/oder modifizierten amorphen Poly-α-Olefinen zur Rückenfixierung von Kunstrasenrohware.

Erfindungswesentlich ist die Maßnahme, dass die Einbindung der getufteten Bändchen der Kunstrasenrohware durch vollständiges oder auch nur teilweises Beschichten mit dem Schmelzkleber auf der Rückseite der Kunstrasenrohware erfolgt

Die Verwendung von Schmelzklebern auf Basis von amorphen Poly-α-Olefinen und/oder modifizierten, amorphen Poly-α-Olefinen hat gegenüber etablierten Methoden der Rückenfixierung von Kunstrasenrohware erhebliche Vorteile. Durch den fehlenden Trocknungsschritt entfällt der Einsatz langer Trockenkanäle. Die entsprechenden Beschichtungsanlagen können in erheblich kompakterer Bauweise ausgeführt werden. Durch den nicht mehr notwendigen Trocknungsschritt entfallen der Einsatz langer Trockenkanäle und die Aufarbeitung des Kondenswassers. Neben den günstigeren Investitionskosten sind auch die laufenden Kosten eines solchen Verfahrens erheblich niedriger, da für das Formulieren und Aufbringen eines Schmelzklebers nur ein Bruchteil der Energie erforderlich ist, als für das Verdampfen von 400 bis 600 g Wasser pro m² Kunstrasen.

Bevorzugt ist eine Kunstrasenrohware, dadurch gekennzeichnet, dass ein Schmelzkleber, der 20 bis 100 Gew.-% weitgehend amorphes Poly-α-Olefin und/oder modifiziertes amorphes Poly-α-Olefinen enthält, als Schmelze flächig so auf die Rückseite der Kunstrasenrohware aufgetragen wird, dass ein Auftragsgewicht von 100 bis 2 000 g/m² resultiert, wobei die Schmelzviskosität der Beschichtungsmasse bei 190 °C im Bereich von 300 mPas bis 30 000 mPas liegt

Der Schmelzkleber weist im Allgemeinen die folgende Zusammensetzung auf:
a) 0 bis 100 Gew.-% mindestens eines weitgehend amorphen Poly-α-Olefins,
b) 0 bis 100 Gew.-% mindestens eines modifizierten, amorphen Poly-α-Olefins,
c) 0 bis 40 Gew.-% mindestens eines Harzes,
d) 0 bis 20 Gew.-% mindestens eines modifizierten kristallinen Polypropylens,
e) 0 bis 20 Gew.-% mindestens eines kristallinen Polyolefins,
f) 0 bis 80 Gew.-% Füllstoffe oder Pigmente,
g) 0 bis 20 Gew.-% mindestens eines Flammschutzmittels,
h) 0 bis 20 Gew.-% mindestens eines Wachses.

Die Schmelzviskosität des Schmelzklebers bei 190 °C, gemessen in einem Rotationsviskosimeter gemäß DIN 53019, liegt im Bereich von 300 mPas bis 30 000 mPas, bevorzugt im Bereich von 600 mPas bis 20 000 mPas, besonders bevorzugt im Bereich von 800 bis 10 000 mPas und insbesondere bevorzugt im Bereich von 1 000 bis 7 000 mPas. Der Schmelzkleber wird flächig so auf die Rückseite der Kunshasenrohware aufgetragen, dass ein Auftragsgewicht von 100 bis 2 000 g/m², bevorzugt von 200 bis 1 500 g/m² und besonders bevorzugt von 300 bis 1 000 g/m² resultiert.

Als weitgehend amorphes Poly-α-Olefin a) eignet sich die folgende Monomerenzusammensetzung:
- 0,1 bis 15 Gew.-% Ethen,
- 20 bis 95 Gew.-% Propen sowie
- 0,1 bis 80 Gew.-% eines linearen und/oder verzweigten α-Olefin-Monomers mit 4 bis 20 Kohlenstoffatomen, wobei 1-Buten, 1-Penten, 1-Hexen, 1-Hepten, 1-Octen, 1-Decen, 1-Dodecen und 1-Octadecen besonders bevorzugte (Co)-monomere sind.
Beispiele für erfindungsgemäße weitgehend amorphe Poly-α-Olefine sind Propen-1-Buten-Ethen-Terpolymere.

In einer bevorzugten Ausführungsform setzt man ein weitgehend amorphes Poly-α-Olefin mit einem Erweichungspunkt (Ring- und Kugelmethode gemäß DIN EN 1427) zwischen 70 und 165 °C, einer Schmelzviskosität (nach DIN 53019) bei 190 °C zwischen 300 und 200 000 mPas, einer Dichte kleiner als 0,90 g/cm³ und einer Nadelpenetration 100/25/5 gemäß DIN EN 1426 zwischen 3 und 50 0,1 mm ein. Entsprechende Polymere können durch gezielte Polymerisation nach dem Stand der Technik hergestellt werden.

Der kristalline Anteil des weitgehend amorphen Poly-α-Olefins kann beispielsweise durch Bestimmen der Schmelzenthalpie mittels der DSC-Methode (nach DIN 53765) abgeschätzt werden. Hierbei wird eine abgewogene Probe zunächst mit einer Aufheizgeschwindigkeit von 10 °C/min von -100 °C bis +210 °C aufgeheizt, dann mit einer Geschwindigkeit von 10 °C/min wieder auf -100 °C abgekühlt. Nachdem auf diese Weise die thermische Vorgeschichte der Probe eliminiert wurde, wird wiederum mit einer Geschwindigkeit von 10 °C/min auf 210 °C erhitzt und hierbei durch Integration des Schmelzpeaks, der auf den Kristallitschmelzpunkt Tₘ zurückzuführen ist, die Schmelzenthalpie der Probe bestimmt Im Rahmen der Erfindung beträgt die Schmelzenthalpie des weitgehend amorphen Poly-α-Olefins maximal 100 J/g, bevorzugt maximal 60 J/g und besonders bevorzugt maximal 40 J/g. Die Untergrenze der Schmelzenthalpie liegt bei 1 J/g, bevorzugt 2 J/g und besonders bevorzugt 4 J/g.

Bevorzugt enthält der Schmelzkleber 5 bis 100 Gew.-% und besonders bevorzugt 20 bis 97 Gew.-% des weitgehend amorphen Poly-α-Olefins a), falls verwendet

Als modifizierte, amorphe Poly-α-olefine b) eignen sich solche mit Maleinsäureanhydrid- und/oder Silanfunktionalisierung, insbesondere silanmodifiziertes Polypropylen, silanmodifiziertes Poly-1-Buten, silamnodifizierte Propen-Ethen-Copolymere, silanmodifizierte Propen-1-Buten-Copolymere, silanmodifizierte 1-Buten-Ethen-Copolymere, silanmodifizierte Propen-1-Buten-Ethen-Terpolymere und/oder mit MSA (Maleinsäureanhydrid) modifizierte Propen-Ethen-Copolymere, MSA-modifiziertes Polypropylen, MSA-modifizierte Propen-1-Buten-Copolymere, MSA-modifizierte 1-Buten-Ethen-Copolymere, MSA-modifizierte Propen-1-Buten-Ethen-Terpolymere. Selbstverständlich können auch Mischungen verschiedener Poly-α-Olefine und modifizierter Poly-α-Olefine eingesetzt werden.

Bevorzugt enthält der Schmelzkleber 5 bis 100 Gew.-% und besonders bevorzugt 30 bis 70 Gew.-% des modifizierten, amorphen Poly-α-Olefins b), falls verwendet.

Das Harz der Komponente c) ist beispielsweise ein natürliches oder synthetisches Terpenharz, ein modifiziertes Terpenharz, ein Kolophoniumharz, ein Cumaron-Inden-Harz, ein aliphatisches, aliphatisch-aromatisches oder aromatisch modifiziertes Kohlenwasserstoffharz, ein Flüssigharz, ein hydriertes cyclisches Kohlenwasserstoffharz oder ein Esterharz wie beispielsweise ein vollständig oder teilweise hydriertes Kolophoniumglycerinesterharz oder ein hydrierter Pentaerythritester eines Kolophoniumharzes. Es kann aber auch jedes andere Harz eingesetzt werden, das mit Poly-α-Olefinen verträglich bzw. teilverträglich ist

Der Schmelzkleber enthält bevorzugt 0,1 bis 35 Gew.-% und besonders bevorzugt 5 bis 30 Gew.-% Harz c).

Das modifizierte kristalline Polypropylen der Komponente d) ist in der Regel ein MSA-modifiziertes Polypropylen. Ebenso können (Meth-)Acrylsäure-modifizierte Polypropylene eingesetzt werden.

Bevorzugt enthält der Schmelzkleber 1 bis 15 Gew.-% und besonders bevorzugt 2 bis 10 Gew.-% der Komponente d), falls verwendet.

Als kristalline Polyolefine der Komponente e) eignen sich besonders isotaktisches Polypropylen oder isotaktisches Poly-1-Buten. Hierbei können sowohl Homo- als auch Copolymere eingesetzt werden, beispielsweise Propen-1-Buten-Copolymere, Ethen-Propen-Random-Copolymere oder Ethen-Propen-Blockcopolymere.

Bevorzugt enthält der Schmelzkleber 1 bis 15 Gew.-% und besonders bevorzugt 2 bis 10 Gew.-% der Komponente e), falls verwendet.

Die Füllstoffe oder Pigmente der Komponente f) können beispielsweise Ruß, Calciumcarbonat, Bariumsulfat, Aluminiumoxid, Aluminiumhydroxid oder Magnesium-hydroxid (die gleichzeitig auch als Flammschutzmittel wirken können), Graphit, anorganische oder organische Farbpigmente oder Weißpigmente sein.

Bevorzugt werden hiervon 0,05 bis 70 Gew.-% und besonders bevorzugt 1 bis 60 Gew.-% eingesetzt, falls verwendet.

Als Flammschutzmittel der Komponente g) kann jedes für Polyolefinformmassen gebräuchliche Flammschutzmittel verwendet werden. Insbesondere kommen bromierte oder phosphorhaltige Flammschutzmittel in Frage. Die Beschichtungsmasse enthält bevorzugt 0,05 bis 10 Gew.-% Flammschutzmittel, falls verwendet.

Als Wachs h) kann jedes gebräuchliche Polyethylenwachs oder Polypropylenwachs eingesetzt werden, beispielsweise Fischer-Tropsch-Wachse oder Polyethylenparaffine, wie sie entweder durch Polymerisation von Ethylen oder durch Abbau höhermolekularer Polyethylene gewonnen werden, Tafelparaffine oder mikrokristalline Erdölparaffine. Die Beschichtungsmasse enthält bevorzugt 0,1 bis 15 Gew.-% und besonders bevorzugt 2 bis 12 Gew.-% Wachs, falls verwendet.

Falls spezielle anwendungstechnische Erfordernisse erfüllt werden sollen, können noch insgesamt maximal 30 Gew.-% anderer Zusatzstoffe wie z. B. Ethylen-Vinylacetat-Copolymer, Polyisobuten, Kautschuk (EPM, EPDM, SEBS), Mineralöl, Stabilisatoren und/oder Antistatika enthalten sein.

Der Erweichungspunkt des Schmelzklebers, gemessen mit der Ring- und Kugelmethode, beträgt bevorzugt mindestens 80 °C, besonders bevorzugt mindestens 85 °C und insbesondere bevorzugt mindestens 90 °C, während er bevorzugt maximal 165 °C, besonders bevorzugt maximal 150 °C und insbesondere bevorzugt maximal 140 °C beträgt.

Der Schmelzkleber kann auf die Rückseite der Kunstrasenrohware beispielsweise mittels Rakelauftrag, Sprühauftrag, Rollenauftrag oder mit einer Breitschlitzdüse aufgebracht werden. Die Auftragstemperatur liegt über der Erweichungstemperatur der Beschichtungsmasse und in der Regel im Bereich von 100 bis 190 °C; sie richtet sich selbstverständlich auch nach dem Material des zu beschichtenden Kunstrasens. Bei einer Kunstrasenrohware aus Polyethylen- oder Polypropylenfaser wird besonders vorteilhaft mit einer Auftragstemperatur von 140 bis 160 °C gearbeitet, während höherschmelzende Kunstrasenrohware, z. B. aus PA 66, im Prinzip auch Auftragstemperaturen von mehr als 170 °C gestattet.

Das erforderliche Beschichtungsgewicht ist insbesondere von der Dicke der Bändchengarne abhängig.

Falls gewünscht, können in einem Arbeitsschritt gleichzeitig die Fixierung des Rückens erfolgen, als auch ein Vlies, ein Filz oder ein Schaum zulaminiert werden, wobei letztere aus einer Vielzahl unterschiedlicher Materialien bestehen können. Falls gewünscht, kann mit dem gleichen Auftragssystem auch eine Schwerbeschichtungsmasse im Anschluss an die Rückenfixierung appliziert werden.

Durch die ausschließliche Verwendung sortenreiner Rohstoffe in dem erfindungsgemäß verwendeten Schmelzkleber wird das Recycling der Kunstrasen, die beispielsweise aus Polyethylen, Polypropylen oder Polyamid bestehen können, deutlich erleichtert. Im Falle von Polyethylen und Polypropylen als Kunstrasenmaterial ist ein sortenreines Recycling möglich.

Zusammen mit den Energieeinsparungen im Vergleich mit der Latexbeschichtung kann die Erfindung als ökonomische sowie umwelt- und ressourcenschonende Alternative zu dem derzeit etablierten Stand der Technik angesehen werden.

Die Erfindung wird im Folgenden durch Beispiele näher erläutert.

### Beispiele

1. Herstellung der Schmelzkleber
1.1 Schmelzkleber 1
1.1.a. In einem ölbeheizten Rührkessel wurden folgende Substanzen zusammen bei 190 °C unter Rühren aufgeschmolzen:
42,5 Gew.-Teile eines weitgehend amorphen, propenreichen Poly-α-Olefins a) mit einer Schmelzviskosität von 8 000 mPas/190 °C (VESTOPLAST^{®} 708; Nadelpenetration bei 25 °C von 20 0,1 mm; Erweichungspunkt 106 °C) sowie
42,5 Gew.-Teile eines weitgehend amorphen, butenreichen Poly-α-Olefins a) mit einer Schmelzviskosität von 8 000 mPas/190 °C (VESTOPLAST^{®} 508; Nadelpenetration bei 25 °C von 14 0,1 mm; Erweichungspunkt 84 °C).
5 Gew.-Teile eines MSA-modifizierten Polypropylens d) [Exxelor^{®} PO 1015 mit einem MFR (2,16 kg, 230 °C)von 160 g/10 min] wurden zugemischt.
Danach erfolgte die portionierte Zudosierung von 10 Gew.-Teilen eines aliphatischen Kohlenwasserstoffharzes (EASTOTAC^{®} H130, Viskosität 1000 mPas/190 °C; Erweichungspunkt 130 °C).
Die gesamte Mischung wurde unter Rühren 1 Stunde bei 180 °C homogenisiert.
Man erhielt eine Masse mit folgenden Eigenschaften:

| | |
|---|---|
| Erweichungspunkt, Ring und Kugel: | 141 °C |
| Nadelpenetration 100/25/5: | 14 0,1 mm |
| Schmelzviskosität bei 190 °C | 8 000 mPas. |

1.2. Schmelzkleber 2
1.2.a. Wie unter 1.1.a. wurden folgende Substanzen unter Inertgas-Atmosphäre gemischt:
50 Gew.-Teile eines silanmodifizierten propenreichen Poly-α-Olefins b) mit einer Schmelzviskosität von 5 000 mPas/190 °C (VESTOPLAST^{®} 206; Nadelpenetration bei 25 °C von 19 0,1 mm; Erweichungspunkt 98 °C),
30 Gew.- eines weitgehend amorphen, propenreichen Poly-α-Olefins a) mit einer Schmelzviskosität von 8 000 mPas/190 °C (VESTOPLAST^{®} 708; Nadelpenetration bei 25 °C von 20 0,1 mm; Erweichungspunkt 106 °C),
20 Gew.-Teile eines aliphatischen Kohlenwasserstoffharzes c) (ESCOREZ^{®} 5320; Viskosität 2000 mPas/175 °C; Erweichungspunkt 125 °C).
Man erhielt eine Masse mit folgenden Eigenschaften:

| | |
|---|---|
| Erweichungspunkt, Ring und Kugel: | 96 °C |
| Nadelpenetration 100/25/5: | 20 0,1 mm |
| Schmelzviskosität bei 190 °C | 4 000 mPas. |

2. Rückenfixierung von Kunstrasenrohware
Versuch 1:
   Eingesetzt wurde getuftete Kunstrasenrohware aus Polypropenbändchenmaterial mit einem Polypropylen-Trägergewebe mit einem Gesamtgewicht von 1 250 g/m². Zur Verankerung der Bändchenpole im Trägergewebe wurde der Kunstrasenrücken mit dem vorstehend beschriebenen Schmelzkleber 1 beschichtet. Das Vorstrichmaterial wurde durch ein auf 160 °C beheiztes Messerrakel, das gegen eine beheizte Walze arbeitete, auf den Rücken der Kunstrasenbahn aufgebracht. Die Temperatur des Schmelzklebers betrug hierbei 160 °C, die Beschichtungsgeschwindigkeit 5 m/min und das Auftragsgewicht 1 000 g/m².
   Durch die Rückenfixierung wurden die Bändchenpole mit dem Trägergewebe verankert. Die Noppenausreißfestigkeit betrug nach 1 Tag 4 kg/Pol.
Versuch 2:
   Eingesetzt wurde getuftete Kunstrasenrohware aus Polyethylenbändchenmaterial mit einem Polyester-Trägergewebe mit einem Gesamtgewicht von 1 450 g/m². Zur Verankerung der Bändchenpole im Trägergewebe wurde der Kunstrasenrücken mit dem vorstehend beschriebenen Schmelzkleber 2 beschichtet. Das Vorstrichmaterial wurde durch ein auf 160 °C beheiztes Messerrakel, das gegen eine beheizte Walze arbeitete, auf den Rücken der Kunstrasenbahn aufgebracht. Die Temperatur des Schmelzklebers betrug hierbei 150 °C, die Beschichtungsgeschwindigkeit 5 m/min und das Auftragsgewicht 600 g/m².
   Die Bändchenpole wurden mit dem Trägergewebe verankert. Die Noppenausreißfestigkeit betrug nach einem Tag 3,9 kg/Pol und nach 5 Tagen 4,9 kg/Pol.

## Patentansprüche

1. Kunstrasenrohware,
**dadurch gekennzeichnet,**
**dass** diese zur Rückenfixierung einen Schmelzkleber auf Basis von amorphen Poly-α-Olefinen enthält, wobei das amorphe Poly-α-Olefin a) die Monomerenzusammensetzung
- 0,1 bis 15 Gew.-% Ethen,
- 20 bis 95 Gew.-% Propen sowie
- 0,1 bis 80 Gew.-% eines linearen und/oder verzweigten α-Olefin-Monomers mit 4 bis 20 Kohlenstoffatomen
aufweist.

2. Kunstrasenrohware,
**dadurch gekennzeichnet,**
**dass** ein Schmelzkleber, der 20 bis 100 Gew.-% amorphes Poly-α-Olefin enthält, als Schmelze flächig so auf die Rückseite der Kunstrasenrohware aufgetragen wird, dass ein Auftragsgewicht von 100 bis 2 000 g/m² resultiert, wobei die Schmelzviskosität der Beschichtungsmasse bei 190 °C im Bereich von 300 mPas bis 30 000 mPas liegt.

3. Kunstrasenrohware nach einem der vorhergehenden Ansprüche,
**dadurch gekennzeichnet,**
**dass** das amorphe Poly-α-Olefin a) einen Erweichungspunkt zwischen 70 und 165 °C, eine Schmelzviskosität bei 190 °C zwischen 2 000 und 200 000 mPas, eine Dichte kleiner als 0,90 g/cm³ und eine Nadelpenetration zwischen 3 und 50 0,1 mm besitzt.

4. Kunstrasenrohware nach einem der vorhergehenden Ansprüche,
**dadurch gekennzeichnet,**
**dass** der Schmelzkleber zusätzlich ein modifiziertes, amorphes Poly-α-Olefin b) mit Maleinsäureanhydrid- und/oder Silanfunktionalisierung enthält.

5. Kunstrasenrohware nach Anspruch 4,
**dadurch gekennzeichnet,**
**dass** als Komponente b) silanmodifiziertes Polypropylen, silanmodifiziertes Poly-1-Buten, silanmodifizierte Propen-Ethen-Copolymere, silanmodifizierte Propen-1-Buten-Copolymere, silanmodifizierte 1-Buten-Ethen-Copolymere, silanmodifizierte Propen-1-Buten-Ethen-Terpolymere und/oder mit MSA (Maleinsäureanhydrid) modifizierte Propen-Ethen-Copolymere, MSA-modifiziertes Polypropylen, MSA-modifizierte Propen-1-Buten-Copolymere, MSA-modifizierte 1-Buten-Ethen-Copolymere und/oder MSA-modifizierte Propen-1-Buten-Ethen-Terpolymere enthalten sind.

6. Kunstrasenrohware nach einem der vorhergehenden Ansprüche,
**dadurch gekennzeichnet,**
**dass** der Schmelzkleber zusätzlich 0,1-35 Gew.-% als Harz c) ein natürliches oder synthetisches Terpenharz, ein modifiziertes Terpenharz, ein Kolophoniumharz, ein Cumaron-Inden-Harz, ein aliphatisches, aliphatisch-aromatisches oder aromatisch modifiziertes Kohlenwasserstoffharz, ein Flüssigharz, ein hydriertes cyclisches Kohlenwasserstoffharz oder ein Esterharz wie beispielsweise ein vollständig oder teilweise hydriertes Kolophoniumglycerinesterharz und/oder ein hydrierter Pentaerythritester eines Kolophoniumharzes enthalten ist.

7. Kunstrasenrohware nach einem der vorhergehenden Ansprüche,
**dadurch gekennzeichnet,**
**dass** der Schmelzkleber zusätzlich 1 bis 15 Gew.-% als Komponente d) mit Maleinsäureanhydrid oder (Meth-)Acrylsäure modifiziertes kristallines Polypropylen enthält.

8. Kunstrasenrohware nach einem der vorhergehenden Ansprüche,
**dadurch gekennzeichnet,**
**dass** der Schmelzkleber zusätzlich 1 bis 15 Gew.-% als Komponente e) isotaktisches Polypropylen, isotaktisches Poly-1-Buten, Propen-1-Buten-Copolymere, Ethen-Propen-Random-Copolymere und/oder Ethen-Propen-Blockcopolymere enthält.

9. Kunstrasenrohware nach einem der vorhergehenden Ansprüche,
**dadurch gekennzeichnet,**
**dass** der Schmelzkleber zusätzlich 0,05 bis 70 Gew.-% als Komponente f) Ruß, Calciumcarbonat, Bariumsulfat, Aluminiumoxid, Aluminiumhydroxid oder
Magnesiumhydroxid, Graphit, anorganische oder organische Farbpigmente und/oder Weißpigmente enthält.

10. Kunstrasenrohware nach einem der vorhergehenden Ansprüche,
**dadurch gekennzeichnet,**
**dass** der Schmelzkleber zusätzlich 0,05 bis 10 Gew.-% mindestens eines Flammschutzmittels als Komponente g) enthält.

11. Kunstrasenrohrware nach einem der vorhergehenden Ansprüche,
**dadurch gekennzeichnet,**
**dass** der Schmelzkleber zusätzlich 0,1 bis 15 Gew.-% als Komponente h) Fischer-Tropsch-Wachs oder Polyethylenparaffin enthält.

12. Verfahren zur Rückenfixierung von Kunstrasenrohware,
**dadurch gekennzeichnet,**
**dass** ein Schmelzkleber auf Basis von amorphen Poly-α-Olefinen eingesetzt wird, wobei das amorphe Poly-α-Olefin a) die Monomerenzusammensetzung
- 0,1 bis 15 Gew.-% Ethen,
- 20 bis 95 Gew.-% Propen sowie
- 0,1 bis 80 Gew.-% eines linearen und/oder verzweigten α-Olefin-Monomers mit 4 bis 20 Kohlenstoffatomen
aufweist.

13. Verfahren nach Anspruch 12,
**dadurch gekennzeichnet,**
**dass** ein Schmelzkleber, der 20 bis 100 Gew.-% amorphes Poly-α-Olefin enthält, als Schmelze flächig so auf die Rückseite der Kunstrasenrohware aufgetragen wird, dass ein Auftragsgewicht von 100 bis 2 000 g/m² resultiert, wobei die Schmelzviskosität der Beschichtungsmasse bei 190 °C im Bereich von 300 mPas bis 30 000 mPas liegt.

14. Verwendung eines Schmelzklebers auf Basis von amorphen Poly-α-Olefinen zur Rückenfixierung von Kunstrasenrohware, wobei das amorphe Poly-α-Olefin a) die Monomerenzusammensetzung
- 0,1 bis 15 Gew.-% Ethen,
- 20 bis 95 Gew.-% Propen sowie
- 0,1 bis 80 Gew.-% eines linearen und/oder verzweigten α-Olefin-Monomers mit 4 bis 20 Kohlenstoffatomen aufweist.

## Claims

1. Artificial turf stock material, **characterized in that** it contains a hotmelt adhesive based on amorphous poly-α-olefins for backfixing wherein the amorphous poly-α-olefin a) has the monomer composition
- from 0.1% to 15% by weight of ethene,
- from 20% to 95% by weight of propene, and
- from 0.1% to 80% by weight of a linear and/or branched α-olefin monomer having from 4 to 20 carbon atoms.

2. Artificial turf stock material, **characterized in that** a hotmelt adhesive comprising from 20% to 100% by weight of amorphous poly-α-olefin is applied as a melt uniformly to the backside of the artificial turf stock material so as to obtain an add-on weight in the range from 100 to 2000 g/m², the melt viscosity of the coating composition at 190°C being in the range from 300 mPas to 30 000 mPas.

3. Artificial turf stock material according to any one of the preceding claims, **characterized in that** the amorphous poly-α-olefin a) has a softening point between 70 and 165°C, a melt viscosity between 2000 and 200 000 mPas at 190°C, a density of less than 0.90 g/cm³ and a needle penetration between 3 and 50 0.1 mm.

4. Artificial turf stock material according to any one of the preceding claims, **characterized in that** the hotmelt adhesive additionally comprises a modified amorphous poly-α-olefin b) featuring maleic anhydride and/or silane functionalization.

5. Artificial turf stock material according to Claim 4, **characterized in that** silane-modified polypropylene, silane-modified poly-1-butene, silane-modified propene-ethene copolymers, silane-modified propene-1-butene copolymers, silane-modified 1-butene-ethene copolymers, silane-modified propene-1-butene-ethene terpolymers and/or (maleic anhydride) MA-modified propene-ethene copolymers, MA-modified polypropylene, MA-modified propene-1-butene copolymers, MA-modified 1-butene-ethene copolymers and/or MA-modified propene-1-butene-ethene terpolymers are present as component b).

6. Artificial turf stock material according to any one of the preceding claims, **characterized in that** the hotmelt adhesive additionally contains 0.1%-35% by weight of a natural or synthetic terpene resin, a modified terpene resin, a rosin, a coumarone-indene resin, an aliphatic, aliphatic-aromatic or aromatic-modified hydrocarbonaceous resin, a liquid resin, a hydrogenated cyclic hydrocarbonaceous resin or an ester resin such as for example a fully or partially hydrogenated rosin glyceryl ester resin and/or a hydrogenated pentaerythrityl ester of a rosin as resin c).

7. Artificial turf stock material according to any one of the preceding claims, **characterized in that** the hotmelt adhesive additionally contains from 1% to 15% by weight of crystalline polypropylene modified with maleic anhydride or (meth)acrylic acid as component d).

8. Artificial turf stock material according to any one of the preceding claims, **characterized in that** the hotmelt adhesive additionally contains from 1% to 15% by weight of isotactic polypropylene, isotactic poly-1-butene, propene-1-butene copolymers, ethene-propene random copolymers and/or ethene-propene block copolymers as component e).

9. Artificial turf stock material according to any one of the preceding claims, **characterized in that** the hotmelt adhesive additionally contains from 0.05% to 70% by weight of carbon black, calcium carbonate, barium sulfate, aluminum oxide, aluminum hydroxide or magnesium hydroxide, graphite, organic or inorganic color pigments and/or white pigments as component f).

10. Artificial turf stock material according to any one of the preceding claims, **characterized in that** the hotmelt adhesive additionally contains from 0.05% to 10% by weight of at least one flame retardant as component g).

11. Artificial turf stock material according to any one of the preceding claims, **characterized in that** the hotmelt adhesive additionally contains from 0.1% to 15% by weight of Fischer-Tropsch wax or polyethylene paraffin as component h).

12. Process for backfixing of artificial turf stock material, **characterized in that** a hotmelt adhesive based on amorphous poly-α-olefins is used wherein the amorphous poly-α-olefin a) has the monomer composition
- from 0.1% to 15% by weight of ethene,
- from 20% to 95% by weight of propene, and
- from 0.1% to 80% by weight of a linear and/or branched α-olefin monomer having from 4 to 20 carbon atoms.

13. Process according to Claim 12, **characterized in that** a hotmelt adhesive comprising from 20% to 100% by weight of amorphous poly-α-olefin is applied as a melt uniformly to the backside of the artificial turf stock material so as to obtain an add-on weight in the range from 100 to 2000 g/m², the melt viscosity of the coating composition at 190°C being in the range from 300 mPas to 30 000 mPas.

14. Use of a hotmelt adhesive based on amorphous poly-α-olefins for backfixing of artificial turf stock material wherein the amorphous poly-α-olefin a) has the monomer composition
- from 0.1% to 15% by weight of ethene,
- from 20% to 95% by weight of propene, and
- from 0.1% to 80% by weight of a linear and/or branched α-olefin monomer having from 4 to 20 carbon atoms.

## Revendications

1. Tissu brut pour gazon artificiel, **caractérisé en ce que** celui-ci contient pour la fixation arrière une colle thermofusible à base de poly-α-oléfines amorphes, la poly-α-oléfine amorphe a) présentant la composition de monomères suivante :
- 0,1 à 15 % en poids d'éthène,
- 20 à 95 % en poids de propène et
- 0,1 à 80 % en poids d'un monomère d'α-oléfine linéaire et/ou ramifié contenant 4 à 20 atomes de carbone.

2. Tissu brut pour gazon artificiel, **caractérisé en ce qu'**une colle thermofusible qui contient 20 à 100 % en poids d'une poly-α-oléfine amorphe est appliquée à plat sous la forme d'une masse fondue sur le côté arrière du tissu brut pour gazon artificiel de manière à obtenir un poids d'application de 100 à 2 000 g/m², la viscosité à l'état fondu de la composition de revêtement à 190 °C se trouvant dans la plage allant de 300 mPas à 30 000 mPas.

3. Tissu brut pour gazon artificiel selon l'une quelconque des revendications précédentes, **caractérisé en ce que** la poly-α-oléfine amorphe a) présente un point de ramollissement compris entre 70 et 165 °C, une viscosité à l'état fondu à 190 °C comprise entre 2 000 et 200 000 mPas, une densité inférieure à 0,90 g/cm³ et une pénétration d'aiguille comprise entre 3 et 50 0,1 mm.

4. Tissu brut pour gazon artificiel selon l'une quelconque des revendications précédentes, **caractérisé en ce que** la colle thermofusible contient également une poly-α-oléfine amorphe modifiée b) à fonctionnalisation anhydride de l'acide maléique et/ou silane.

5. Tissu brut pour gazon artificiel selon la revendication 4, **caractérisé en ce que** du polypropylène modifié par du silane, du poly-1-butène modifié par du silane, des copolymères de propène-éthène modifiés par du silane, des copolymères de propène-1-butène modifiés par du silane, des copolymères de 1-butène-éthène modifiés par du silane, des terpolymères de propène-1-butène-éthène modifiés par du silane et/ou des copolymères de propène-éthène modifiés par du MSA (anhydride de l'acide maléique), du polypropylène modifié par du MSA, des copolymères de propène-1-butène modifiés par du MSA, des copolymères de 1-butène-éthène modifiés par du MSA et/ou des terpolymères de propène-1-butène-éthène modifiés par du MSA sont contenus en tant que composant b).

6. Tissu brut pour gazon artificiel selon l'une quelconque des revendications précédentes, **caractérisé en ce que** la colle thermofusible contient également 0,1 à 35 % en poids d'une résine de terpène naturelle ou synthétique, d'une résine de terpène modifiée, d'une résine de colophane, d'une résine de coumarone-indène, d'une résine hydrocarbonée aliphatique, aliphatique-aromatique ou aromatique modifiée, d'une résine liquide, d'une résine hydrocarbonée cyclique hydrogénée ou d'une résine d'ester telle que par exemple une résine d'ester de glycérine de colophane complètement ou partiellement hydrogénée et/ou un ester de pentaérythrite hydrogéné d'une résine de colophane en tant que résine c).

7. Tissu brut pour gazon artificiel selon l'une quelconque des revendications précédentes, caractérisé en ce la colle thermofusible contient également 1 à 15 % en poids de polypropylène cristallin modifié avec de l'anhydride de l'acide maléique ou de l'acide (méth)acrylique en tant que composant d).

8. Tissu brut pour gazon artificiel selon l'une quelconque des revendications précédentes, caractérisé en ce la colle thermofusible contient également 1 à 15 % en poids de polypropylène isotactique, de poly-1-butène isotactique, de copolymères de propène-1-butène, de copolymères aléatoires d'éthène-propène et/ou de copolymères séquencés d'éthène-propène en tant que composant e).

9. Tissu brut pour gazon artificiel selon l'une quelconque des revendications précédentes, caractérisé en ce la colle thermofusible contient également 0,05 à 70 % en poids de noir de carbone, de carbonate de calcium, de sulfate de baryum, d'oxyde d'aluminium, d'hydroxyde d'aluminium ou d'hydroxyde de magnésium, de graphite, de pigments colorés inorganiques ou organiques et/ou de pigments blancs en tant que composant f).

10. Tissu brut pour gazon artificiel selon l'une quelconque des revendications précédentes, caractérisé en ce la colle thermofusible contient également 0,05 à 10 % en poids d'au moins un agent ignifuge en tant que composant g).

11. Tissu brut pour gazon artificiel selon l'une quelconque des revendications précédentes, caractérisé en ce la colle thermofusible contient également 0,1 à 15 % en poids d'une cire de Fischer-Tropsch ou d'une paraffine de polyéthylène en tant que composant h).

12. Procédé de fixation arrière d'un tissu brut pour gazon artificiel, **caractérisé en ce qu'**une colle thermofusible à base de poly-α-oléfines amorphes est utilisée, la poly-α-oléfine amorphe a) présentant la composition de monomères suivante :
- 0,1 à 15 % en poids d'éthène,
- 20 à 95 % en poids de propène et
- 0,1 à 80 % en poids d'un monomère d'α-oléfine linéaire et/ou ramifié contenant 4 à 20 atomes de carbone.

13. Procédé selon la revendication 12, **caractérisé en ce qu'**une colle thermofusible qui contient 20 à 100 % en poids d'une poly-α-oléfine amorphe est appliquée à plat sous la forme d'une masse fondue sur le côté arrière du tissu brut pour gazon artificiel de manière à obtenir un poids d'application de 100 à 2 000 g/m², la viscosité à l'état fondu de la composition de revêtement à 190 °C se trouvant dans la plage allant de 300 mPas à 30 000 mPas.

14. Utilisation d'une colle thermofusible à base de poly-α-oléfines amorphes pour la fixation arrière d'un tissu brut pour gazon artificiel, la poly-α-oléfine amorphe a) présentant la composition de monomères suivante :
- 0,1 à 15 % en poids d'éthène,
- 20 à 95 % en poids de propène et
- 0,1 à 80 % en poids d'un monomère d'α-oléfine linéaire et/ou ramifié contenant 4 à 20 atomes de carbone.
